# EUROPEAN PATENT SPECIFICATION

(11) **EP 0 718 083 B1**
(45) Date of publication and mention of the grant of the patent: **28.02.2001**
(21) Application number: 95116437.5
(22) Date of filing: 18.10.1995
(51) Int. Cl.: B29C 37/00, B29C 41/00

(54) **Process for the production of molded synthetic resin article with finished surface, and molded synthetic resin article with finished surface produced by the process**
Verfahren zum Herstellen eines geformten Kunstharzgegenstandes mit fertigbearbeiteten Oberflach und geformter Kunstharzgegenstand mit fertigbearbeiteten Oberflach nach diesen Verfahren bekommen
Procédé pour la fabrication d'un objet moulé en résine synthétique avec surface finie et objet moulé en résine synthétique avec surface finie obtenue selon ce procédé

(30) Priority: 22.12.1994 JP 33542494
(43) Date of publication of application: 26.06.1996
(73) Proprietor: MARUWA PLASTICS IND. CO., LTD., Ama-gun, Aichi 490-1101 (JP)
(72) Inventor: Watanabe, Hiromu, Jimokuji-cho, Ama-gun, Aichi 490-11 (JP); Kitamura, Masaharu, Otsu-shi, Shiga 520 (JP)
(74) Representative: Klingseisen, Franz, Dipl.-Ing.

(56) References cited:
- EP-A- 0 116 843
- DE-A- 2 154 756
- DE-A- 3 539 088
- DE-C- 3 137 425
- FR-A- 1 497 746
- US-E- R E28 068
- PATENT ABSTRACTS OF JAPAN vol. 012, no. 404 (M-757), 26 October 1988 & JP 63 147617 A (DAINIPPON TORYO CO LTD;OTHERS: 01), 20 June 1988,

## Description

This invention relates to a process for the production of a molded article with a finished surface according to the preamble of claim 1. Also this invention is concerned with a molded synthetic resin article which has been produced by the above process and is provided with a finished surface.

DE-A-3539088 discloses a process for the production of a molded synthetic resin article of that kind. According to this known method, a powdered resin composition is applied onto an inner wall of a mold after electrostatically charging a composition. This known electrocally conductive coating serves for shielding of electromagnetic waves and prevention of charging, which is an object of the above cited German patent application. However, this prior art method is relatively difficult and expensive in execution.

As a process for the easy and low-cost production of lightweight articles such as frames of domestic ceiling light fixtures, it has heretofore been the practice to feed a synthetic resin such as an expandable polyurethane resin into a mold made of silicone rubber or the like and hardening the synthetic resin to form an article of the desired shape, followed by taking the thus-formed article out of the mold. Surface coating of the article so molded from the synthetic resin is then conducted in an additional coating step.

Whichever coating method is employed, the above-described conventional process however requires to take the thus-molded synthetic resin article out of the mold after the hardening of the fed synthetic resin into the desired shape within the mold, and further to coat the molded synthetic resin article. The conventional process therefore requires the coating step in addition to the molding step of the synthetic resin within the mold. The conventional process is also accompanied by the drawbacks that the resulting coating is uneven, a coating material is wasted, and the coated surface has low adhesion to the base material and hence tends to separate.

### SUMMARY OF THE INVENTION

An object of the present invention is therefore to improve the above-described drawbacks of the conventional process. Described more specifically, an object of the present invention is to provide a simple and economical process for forming a firm non-strippable surface on a molded synthetic resin article by using a fine powder in an amount as little as needed without occurrence of uneven coating while omitting the independent coating step for the molded synthetic resin article. Another object of the present invention is to provide a molded synthetic resin article with such a firm non-strippable surface formed thereon in accordance with the above process.
These objects are met by the method defined by claim 1.

In one aspect of the present invention, there is thus provided a process for the production of a molded synthetic resin article with a finished surface, which comprises electrostatically charging an inner wall of a mold at a desired area thereof, causing even attraction of a fine powder onto the charged area, feeding a synthetic resin into the mold, and then molding the synthetic resin under pressure within the mold so that the synthetic resin is pressed against the desired area of the inner wall of the mold to form an even non-strippable firm surface of the powder on a surface of the thus-molded article. The synthetic resin can preferably be an expandable synthetic resin such as expandable polyurethane. In this preferred case, the molding is conducted under heat. As the synthetic resin, a molten synthetic resin can also be fed under pressure into the mold. In this preferred case, the molding is conducted by melt molding.

In another aspect of the present invention, there is also provided a molded synthetic resin article with an even non-strippable firm surface of a fine powder formed on a surface of the article in accordance with the above process.

Owing to the above-described simple and economical features, the process of the present invention has made it possible to omit the independent additional coating step by simply following an ordinary molding process for the synthetic resin except for the electrostatic charging of the mold and the attraction of the fine powder, because the electrostatic charging itself of the inner wall of the mold is easy and application of the fine powder around the charged area, for example, by spraying or the like results in even attraction of the fine powder on the charged area on the inner wall of the mold. Moreover, a surface of the fine powder evenly formed on the inner wall of the mold is transferred and partially embedded in a surface of the molded synthetic resin as the synthetic resin hardens within the mold. Therefore the surface of the fine powder is even and is not strippable. The surface of the fine powder can be evenly applied even to narrow corners, thereby making it possible to apply a coating having an improved artistic appearance. Since the deposition of the fine powder on the inner wall of the mold is conducted by static electricity, non-deposited powder can be readily recovered in a practically unused form so that the consumption of the fine powder can be reduced. The area to be electrostatically charged can be changed freely as desired, thereby making it possible to easily change the coated area.

### BRIEF DESCRIPTION OF THE DRAWINGS

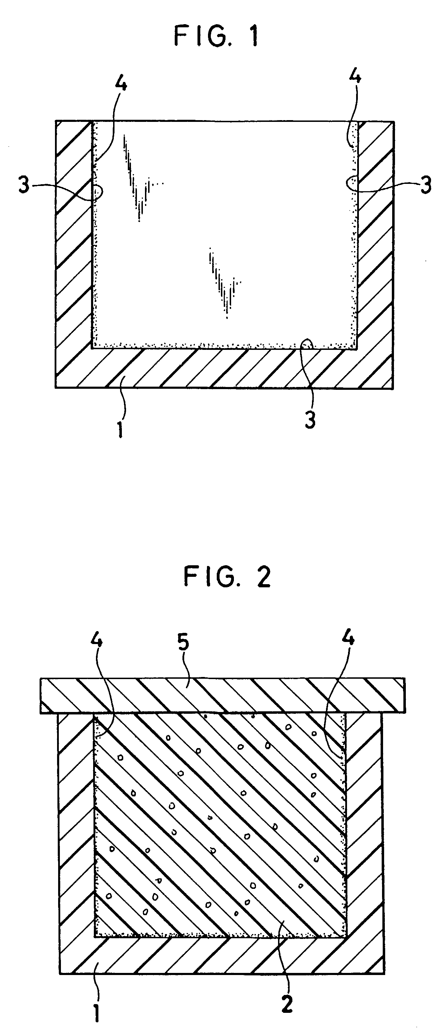

FIG. 1 is a vertical cross-section of a mold for a synthetic resin after deposition of a fine powder on an inner wall of the mold but before feeding of the synthetic resin into the mold, as employed in an Example of the present invention; and
FIG. 2 is a vertical cross-section of the mold with the synthetic resin molded therein.

### DETAILED DESCRIPTION OF THE INVENTION

### AND PREFERRED EMBODIMENT

With reference to the accompanying drawings, the present invention will hereinafter be described by the following Example.

Designated at numeral 1 is a mold made of an electrically insulating material, desirably silicone rubber. A synthetic resin such as an expandable polyurethane is fed into the mold 1 and is then caused to expand under pressure, so that the synthetic resin is molded into a shape conforming with the shape of the mold. Instead of such an expandable synthetic resin, a synthetic resin such as polystyrene, a methacrylate resin, polyethylene, polypropylene or ABS can be charged under pressure. These resins can be molded by so-called melt molding. Numeral 3 indicates electrostatically-charged surfaces, which are areas electrostatically charged by an electrostatic charger out of inner walls of the mold 1. Numeral 4 designates aluminum powder as a fine powder. It is to be noted that the fine powder is not limited to such a metal powder but any fine powder is usable insofar as it can be attracted electrostatically. The aluminum powder 4 is electrostatically fixed on each electrostatically-charged surface 3 inside the mold 1. Designated at numeral 5 is a cover, which closes up the mold 1 to form a closed space in which the fed expandable polyurethane is caused to expand under heat. In the case of a non-expandable synthetic resin, the resin is fed under pressure in a molten form, that is, the resin is molded, for example, by melt molding such as injection molding or blow molding.

A description will hereinafter be made of a process according to one embodiment of the present invention for the production of a molded synthetic resin article with a finished surface. First, static electricity is charged on a desired area of at least one of the inner walls of the mold 1 by an electrostatic charger. If it is desired to apply a coating, for example, to the entirety of a surface of the molded article 2, said surface being in contact with the mold 1, it is only necessary to electrostatically charge the entire inner walls of the mold 1 to provide the electrostatically-charged surfaces 3. To charge static electricity on a desired area of at least one of the inner walls of the mold 1, it is only necessary, as a simplest method, to rub the desired area with a brush or the like. Even after static electricity has been charged to form each electrostatically-charged surface 3, grounding of the electrostatically-charged surface 3 can easily discharge the static electricity.

Second, the aluminum powder 4 is applied onto each electrostatically-charged surface 3 inside the mold 1, for example, by a spray gun or the like. Any aluminum powder 4 which has not been attracted, in other words, has not deposited on each electrostatically-charged surface 3 is then removed from the interior of the mold 1, for example, by brushing it out of the mold 1. The extra aluminum powder can therefore be recovered in a substantially unused form.

Third, the expandable polyurethane is fed into the mold 1 and is then caused to expand under heat. The molding temperature generally ranges from 70°C to 90°C, although it varies depending on the blowing agent incorporated in the expandable polyurethane. The internal pressure produced by the expansion reaches about 10 kg/cm² or so. Because of the feeding of the expandable polyurethane in the mold 1, the expandable polyurethane is obviously brought into contact with the electrostatically-charged surfaces 3, that is, the inner walls of the mold 1, said inner walls carrying the aluminum powder 4 deposited thereon. As the expandable polyurethane expands, the aluminum powder 4 is transferred from the electrostatically charged surfaces 3 onto the surfaces of the resulting foamed polyurethane article. As the foamed polyurethane article is allowed to harden, the aluminum powder 4 is fixed as if it is partially embedded in the surfaces of the foamed polyurethane article 2. After the foamed polyurethane article 2 has hardened, the foamed polyurethane article 2 is taken out of the mold 1.

As the deposition of the aluminum powder 4 on the electrostatically charged surfaces 3 takes place under the action of the static electricity, the aluminum powder 4 can be evenly deposited on the electrostatically-charge surfaces 3 when the aluminum powder 4 is simply applied, for example, sprayed as needed. Since the state of deposition of the aluminum powder 4 is even, the aluminum powder 4 also retains evenness on the surface of the foamed polyurethane article 2 after its transfer from the electrostatically-charged surfaces 3 onto the surfaces of the foamed polyurethane article 2. Owing to the development of the pressure as a result of the expansion, the surface of the fine powder is formed as a non-strippable surface firmer than conventional coatings.

It is also possible to readily limit the coated area of the foamed polyurethane article 2 by limiting the area of each electrostatically-charged surface 3 as desired. This can be effected by one of two methods, one being to limit, from the beginning, the area to be electrostatically charged into the electrostatically-charged surface 3, and the other being once to electrostatically charge the entire area of at least one of the internal wall of the mold 1 into the electrostatically-charged surface 3 and then to ground a desired portion so that the static electricity is removed only at the grounded portion. These methods can be practiced easily and can be selectively used in accordance with the area of the non-charged portion and the efficiency of the work.

In a modification of the above-described embodiment of the present invention, a partial mold which is used to mold a portion of the molded article can be provided in addition to the mold 1 for the whole molded article. This partial mold is assembled in the mold 1, followed by feeding of expandable polyurethane to obtain a single-piece foamed polyurethane article. If plural partial molds of different types are furnished and are changed from one to another, it is possible to easily mold a plurality of modified products with respect to the particular foamed polyurethane article. Use of this modified process makes it possible to easily mold a variety of modified products with respect to a single foamed polyurethane article.

Because of the use of the aluminum powder 4 as a fine powder in the above embodiment, the resulting foamed polyurethane article presents a metallic external appearance. Needless to say, the fine powder is not limited to the aluminum powder 4 but, insofar as a fine powder is employed, no particular limitation is imposed on the kind of the fine powder since any fine powder can generally be attracted by static electricity on the inner walls of the mold 1. Further, a non-expandable synthetic resin can also be fed in a molten form under pressure instead of such a expandable synthetic resin. Here again, a molded article having an even, firm, non-strippable surface can also be obtained.

## Claims

1. A process for the production of a molded synthetic resin article with a finished surface, which comprises electrostatically charging an inner wall of a mold (1) a desired area thereof, causing even attraction at of a fine powder (4) onto the charged area (3), feeding a synthetic resin into the mold, and then molding the synthetic resin under pressure within the mold so that the synthetic resin is pressed against the desired area of the inner wall of the mold to form an even non-strippable firm surface of the powder (4) on a surface of the thus-molded article (2), characterized in that the inner wall of the mold is electrostatically charged by brushing the desired area of the inner wall with a brush.

2. A process according to claim 1, wherein the synthetic resin is an expandable synthetic resin and the molding is conducted under heat.

3. A process according to claim 2, wherein the expandable synthetic resin is expandable polyurethane.

4. A process according to claim 1, wherein as the synthetic resin, a molten synthetic resin is fed under pressure into the mold (1), and the molding is conducted by melt molding.

5. A process according to claim 4, wherein the molten synthetic resin is selected from the group consisting of molten polystyrene, methacrylate resins, polyethylene, polypropylene and ABS.

6. A process according to any one of claims 1 to 5, the fine powder (4) is aluminum powder.

7. A process according to any one of claims 1 to 6, wherein the mold is made of silicone rubber.

8. A process according to any one of claims 1 to 7, further comprising grounding a desired part of the electrostatically charged area (3) to modify the shape of the electrostatically charged area.

9. A molded synthetic resin article with an even non-strippable firm surface of a fine powder (4) formed on a surface of the article (2) in accordance with the process of any one of claims 1 to 8.

## Patentansprüche

1. Verfahren für die Herstellung eines geformten Kunstharzgegenstandes mit einer fertigbearbeiteten Oberfläche, das umfasst das elektrostatische Aufladen einer inneren Wand einer Form (1) an einem gewünschten Bereich derselben, das Veranlassen einer gleichmäßigen Anziehung eines feinen Pulvers (4) an dem aufgeladenen Bereich (3), das Zuführen eines Kunstharzes in die Form und dann das Frmen des Kunstharzes unter Druck innerhalb der Form, sodass das Kunstharz gegen den gewünschten Bereich der inneren Wand der Form zur Bildung einer gleichmäßigen, nicht-abziehbaren, festen Oberfläche des Pulvers (4) an einer Oberfläche des so geformten Gegenstandes (2) gedrückt wird, dadurch gekennzeichnet, dass die innere Wand der Form im Wege des Bürstens des gewünschten Bereichs der inneren Wand mit einer Bürste elektrostatisch aufgeladen wird.

2. Verfahren nach Anspruch 1, wobei das Kunstharz ein expandierbares Kunstharz ist und das Formen unter Wärme durchgeführt wird.

3. Verfahren nach Anspruch 2, wobei das expandierbare Kunstharz expandierbares Polyurethan ist.

4. Verfahren nach Anspruch 1, wobei als das Kunstharz ein aufgeschmolzenes Kunstharz unter Druck in die Form (1) eingeführt wird und das Formen im Wege des Schmelzformens durchgeführt wird.

5. Verfahren nach Anspruch 4, wobei das aufgeschmolzene Kunstharz aus der Gruppe bestehend aus geschmolzenen Polystyrol, Methacrylatharzen, Polyethylen, Polypropylen und ABS ausgewählt wird.

6. Verfahren nach irgendeinem der Ansprüche 1 bis 5, wobei das feine Pulver (4) Aluminiumpulver ist.

7. Verfahren nach irgendeinem der Ansprüche 1 bis 6, wobei die Form aus Silicongummi hergestellt wird.

8. Verfahren nach irgendeinem der Ansprüche 1 bis 7, weiter umfassend das Erden eines gewünschten Teils des elektrostatisch aufgeladenen Bereichs (3) zur Modifizierung der Gestalt des elektrostatischen aufgeladenen Bereichs.

9. Geformter Kunstharzgegenstand mit einer gleichmäßigen, nicht-abziehbaren, festen Oberfläche eines feinen Pulvers (4), die an einer Oberfläche des Gegenstandes (2) gemäß dem Verfahren nach irgendeinem der Ansprüche 1 bis 8 hergestellt ist.

## Revendications

1. Un procédé pour la fabrication d'un objet moulé en résine synthétique avec une surface finie qui consiste à charger électrostatiquement une paroi interne d'un moule (1) dans une superficie souhaitée de celui-ci, à provoquer une attraction uniforme d'une poudre fine (4) sur la superficie chargée (3), à amener une résine synthétique dans le moule et à mouler ensuite la résine synthétique sous pression dans le moule si bien que la résine synthétique est appliquée contre la superficie désirée de la paroi interne du moule pour former une pellicule ferme uniforme non détachable ou non pelable de la poudre (4) sur une surface de l'article ainsi moulé (2), caractérisé en ce que la paroi interne du moule est chargée électrostatiquement en balayant la superficie souhaitée de la paroi interne avec un balai.

2. Un procédé selon la revendication 1, dans lequel la résine synthétique est une résine synthétique apte à être expansée et le moulage est mis en oeuvre avec de la chaleur.

3. Un procédé selon la revendication 2, dans lequel la résine synthétique apte à être expansée est du polyuréthane apte à être expansé.

4. Un procédé selon la revendication 1, dans lequel, en tant que résine synthétique, on alimente sous pression dans le moule (1) une résine synthétique fondue et le moulage est mis en oeuvre par moulage à l'état fondu.

5. Un procédé selon la revendication 4, dans lequel la résine synthétique fondue est choisie parmi le groupe comprenant le polystyrène fondu, les résines méthacrylates, le polyéthylène, le polypropylène et l'ABS.

6. Un procédé selon l'une quelconque des revendications 1 à 5, dans lequel la poudre fine (4) est de la poudre d'aluminium.

7. Un procédé selon l'une quelconque des revendications 1 à 6, dans lequel le moule est constitué de caoutchouc siliconé.

8. Un procédé selon l'une quelconque des revendications 1 à 7, comprenant, en outre, le broyage d'une partie souhaitée de la superficie chargée électrostatiquement (3) pour modifier la forme de la superficie chargée électrostatiquement.

9. Un objet en résine synthétique moulé avec une pellicule ferme uniforme non détachable ou non pelable d'une poudre fine (4) formée sur une surface de l'objet (2) conformément au procédé selon l'une quelconque des revendications 1 à 8.
